# FASCICULE DE BREVET EUROPEEN

(11) **EP 3 638 885 B1**
(45) Date de publication et mention de la délivrance du brevet: **04.08.2021**
(21) Numéro de dépôt: 18737340.2
(22) Date de dépôt: 12.06.2018
(51) Int. Cl.: F01D 5/28, C23C 4/04, C23C 4/02, C23C 4/06, C23C 4/11, C23C 4/134, C23C 4/18

(54) **PIÈCE DE TURBOMACHINE REVÊTUE ET PROCÉDÉ DE FABRICATION ASSOCIÉ**
BESCHICHTETES TURBOMASCHINENBAUTEIL UND ZUGEHÖRIGES HERSTELLUNGSVERFAHREN
COATED TURBOMACHINE COMPONENT AND CORRESPONDING METHOD OF MANUFACTURING

(30) Priorité: 12.06.2017 FR 1755210
(43) Date de publication de la demande: 22.04.2020
(73) Titulaire: Safran, 75015 Paris (FR)
(72) Inventeur: BIANCHI, Luc, 77550 Moissy-Cramayel (FR); JOULIA, Aurélien, 77550 Moissy-Cramayel (FR); BERNARD, Benjamin Dominique Roger Joseph, 77550 Moissy-Cramayel (FR)
(74) Mandataire: Cabinet Beau de Loménie
(86) Numéro de dépôt international: PCT/FR2018/051359
(87) Numéro de publication internationale: WO 2018/229409

(56) Documents cités:
- EP-A1- 3 168 323
- EP-A2- 2 537 822
- WO-A2-2009/091721
- CN-A- 105 039 894

## Description

### Arrière-plan de l'invention

La présente invention se rapporte au domaine général des revêtements de protection utilisés pour isoler thermiquement des pièces dans des environnements à haute température telles que les pièces utilisées dans des parties chaudes des turbomachines aéronautiques ou terrestres.

Afin d'améliorer le rendement des turbomachines, en particulier des turbines haute pression (TuHP) pour les systèmes stationnaires terrestres ou pour la propulsion aéronautique, des températures de plus en plus élevées sont envisagées. Dans ces conditions, les matériaux utilisés, comme les alliages métalliques ou matériaux composites à matrice céramique (CMC), nécessitent une protection, principalement pour maintenir une température de surface suffisamment basse garantissant leur intégrité fonctionnelle et limitant leur oxydation/corrosion par l'atmosphère environnante.

Les protections de types « barrière thermique » (BT) ou « barrière environnementale » (EBC pour « Environmental Barrier Coating » en anglais), sont des empilements multicouches complexes généralement constitués d'une sous-couche permettant une protection contre l'oxydation/corrosion déposée à la surface du matériau de base (alliages métallique ou matériau composite) du substrat, elle-même surmontée d'un revêtement céramique dont la fonction première est de limiter la température de surface des composants revêtus. Afin d'assurer sa fonction de protection contre l'oxydation/corrosion et de favoriser l'accrochage du revêtement céramique, la sous-couche peut être pré-oxydée afin de former à sa surface une couche d'alumine dense appelée « Thermally Growth Oxyde » (TGO) dans le cas des barrières thermiques. De tels systèmes de protection sont notamment décrits dans les documents D. R. Clarke, M. Oechsner, N. P. Padture, « Thermal-Barrier coatings for more efficient gas-turbine engines », MRS Bulletin, 37, 2012, pp 892-898 et D. Zhu, R. A. Miller, « Thermal and Environmental Barrier Coatings for Advanced Propulsion Engine Systems », NASA Technical Mémorandum, 213129, 2004.

La durée de vie de ces systèmes (BT et EBC) dépend de la résistance de l'empilement au cyclage thermique, d'une part, et de la résistance de la couche externe aux agressions environnementales (érosion par les particules solides, résistance chimique, corrosion, ...), d'autre part.

En particulier, ces systèmes se dégradent très rapidement lorsqu'ils sont exposés à un milieu riche en particules de sable ou de cendre volcanique (riches en composés inorganiques type silice) que l'on caractérise communément par l'appellation générique CMAS (pour oxydes de Calcium, Magnésium, Aluminium et Silicium). L'infiltration du CMAS à l'état fondu dans une barrière thermique ou une barrière environnementale produit généralement une dégradation par :
- rigidification de la couche infiltrée conduisant à une rupture mécanique (délamination) ;
- déstabilisation par dissolution chimique de la barrière thermique et formation de produits recristallisés présentant des propriétés mécaniques et/ou des volumes différents.

Pour s'affranchir de cette problématique, des compositions dites « anti-CMAS » ont été développées, ces compositions permettant la formation d'une couche barrière étanche par réaction chimique avec le CMAS comme décrit notamment dans le document C. G. Levi, J. W. Hutchinson, M.-H. Vidal-Sétif, C. A. Johnson, « Environmental dégradation of thermal barrier coatings by molten deposits », MRS Bulletin, 37, 2012, pp 932-941.

Toutefois ces systèmes présentent encore des limitations fonctionnelles réduisant leur efficacité, parmi lesquelles, on peut notamment citer :
- La fissuration de la BT en service par effet thermomécanique induisant des chemins d'infiltration privilégiés par les CMAS fondus ;
- La persistance d'une épaisseur infiltrée variable due à la compétition entre l'infiltration capillaire des CMAS dans le revêtement et la cinétique réactionnelle de formation de la phase barrière étanche. Plus cette épaisseur infiltrée est importante, plus le risque de fragilisation mécanique de la BT est fort. En effet, une rigidification du système est alors à craindre induisant des durées vie limitées malgré l'arrêt de l'infiltration des CMAS ;
- La nécessité d'employer un revêtement anti-CMAS présentant une morphologie dense et exempte de fissurations verticales afin de minimiser cette infiltration capillaire du contaminant liquide. Dans ce cas, le système devient sensible aux contraintes thermomécaniques induites par les différences de coefficient de dilatation thermique des différents éléments du système, et résulte donc en des durées de vie limitées encore une fois.

EP 2 537 822 A2 divulgue un revêtement avec une couche intermédiaire comprenant des particules d'oxycarbure de silicium (SiOC), EP 3 168 323 A1 divulgue un revêtement comprenant des particules hydrophobes et CN 105 039 984 A divulgue une couche anti-mouillante sur un revêtement de protection contre les CMAS.

Il existe donc un besoin pour une pièce de turbomachine munie d'une couche de protection contre les CMAS qui permet de limiter la profondeur de pénétration des CMAS fondus dans la couche de protection.

### Objet et résumé de l'invention

La présente invention a donc pour but principal de limiter la pénétration capillaire des CMAS fondus dans une couche de protection anti-CMAS en favorisant la réaction de formation de la couche étanche protectrice au plus près de la surface du revêtement en proposant une pièce de turbomachine revêtue comprenant un substrat et au moins une couche de protection contre les aluminosilicates de calcium et de magnésium CMAS présent sur ladite couche, la couche comprenant une première phase d'un matériau de protection contre les aluminosilicates de calcium et de magnésium CMAS et une deuxième phase comprenant des particules d'un matériau anti-mouillant aux CMAS liquides dispersées dans la couche de protection. Par « matériau anti-mouillant aux CMAS», on entend ici un matériau qui confère à la couche protection contre les aluminosilicates de calcium et de magnésium CMAS la propriété d'avoir un angle de contact entre la surface exposée de ladite couche de protection et une goutte de CMAS liquide supérieur ou égale à 45°, de préférence supérieur ou égale à 90°.

L'ajout d'une phase non mouillante pour les CMAS sous forme divisée dans la première phase ou phase de matrice de la couche de protection anti-CMAS va permettre non seulement de limiter le contact entre les CMAS fondus et la couche de protection contre les CMAS à la surface de cette dernière, mais aussi de limiter l'infiltration des contaminants liquides dans les fissures verticales. Ainsi, la réactivité de la couche de protection, permettant de former par réaction chimique avec les CMAS une couche continue étanche à toute autre contamination (couche barrière), est privilégiée par rapport aux mécanismes d'infiltration capillaire.

On augmente ainsi la durée de vie d'une pièce de turbomachine incluant la couche de protection contre les CMAS conforme à l'invention en favorisant la formation de la couche étanche protectrice au plus près de la surface de la couche de protection. L'aspect sacrificiel de la couche de protection est atténué, tout comme sa rigidification. La durée de vie de la couche de protection et, par conséquent, de la pièce de turbomachine revêtue est en outre augmentée en autorisant la fissuration verticale des couches de protection contre les CMAS à réactivité renforcée qui permet d'accommoder les déformations thermomécaniques sans que les fissurations verticales soient infiltrées par les CMAS.

Selon l'invention, le matériau anti-mouillant utilisé pour la deuxième phase de la couche de protection correspond à un matériau ou un mélange de matériaux choisis parmi les matériaux suivants : CaF₂, LnPO₄ où Ln = La (Lanthane), Gd (Gadolinium), Sm (Samarium), Nd (Néodyme)), les phases MAX (Mₙ₊₁AXₙ (n=1,2,3) où M = Sc (Scandium), Y (Yttrium), La (Lanthane), Mn (manganèse), Re (Rhénium), W (Tungstène), Hf (Hafnium), Zr (Zirconium), Ti (Titane), A = groupes IIIA, IVA, VA, VIA et X = C,N, AIN, BN, SiC et SiOC.

Selon un autre aspect particulier de l'invention, les particules de matériau anti-mouillant dispersées dans la couche de protection contre les CMAS présentent une taille moyenne comprise entre 10 nm et 10 µm.

Selon un autre aspect particulier de l'invention, la couche de protection contre les CMAS présente une teneur volumique en particules de matériau anti-mouillant comprise entre 1% et 80%.

Selon un autre aspect particulier de l'invention, le pourcentage volumique de particules de matériau anti-mouillant présentes dans la couche de protection contre les CMAS varie dans le sens de l'épaisseur de la couche de protection, le pourcentage volumique de particules de matériau anti-mouillant augmentant progressivement entre une première zone de ladite couche voisine du substrat et une deuxième zone de ladite couche éloignée de la première zone.

Selon un autre aspect particulier de l'invention, la couche de protection contre les CMAS présente une épaisseur comprise entre 1 µm et 1000 µm.

Selon un autre aspect particulier de l'invention, le matériau de protection contre les aluminosilicates de calcium et de magnésium CMAS de la première phase correspond à un des matériaux suivants ou à un mélange des matériaux suivants : les zirconates de terre rare RE₂Zr₂O₇, où RE = Y (Yttrium), La (Lanthane), Ce (Cérium), Pr (Praséodyme), Nd (Néodyme), Pm (Prométhium), Sm (Samarium), Eu (Europium), Gd (Gadolinium), Tb (Terbium), Dy (Dysprosium), Ho (Holmium), Er (Erbium), Tm (Thulium), Yb (Ytterbium), Lu (Lutécium), les zircones partiellement ou totalement stabilisées, les phases delta A₄B₃O₁₂, où A= Y → Lu et B = Zr, Hf, les composites Y₂O₃ avec ZrO₂, Al₂O₃, ou TiO₂, les hexaaluminates, les spinelles, les mono-silicates et di-silicates de terres rares RE où RE = Y, La, Ce, Pr, Nd, Pm, Sm, Eu, Gd, Tb, Dy, Ho, Er, Tm, Yb, Lu).

Selon un autre aspect particulier de l'invention, une couche de barrière thermique est interposée entre le substrat et la couche de protection contre les aluminosilicates de calcium et de magnésium CMAS.

Selon un autre aspect particulier de l'invention, le substrat est en superalliage à base de nickel ou cobalt et comporte à sa surface une couche de liaison alumino-formeuse ou une couche en matériau composite à matrice céramique (CMC), ou une couche en matériau composite à matrice céramique (CMC) revêtue d'une couche de liaison alumino-formeuse.

L'invention a également pour objet un procédé de fabrication d'une pièce de turbomachine selon l'invention, comprenant au moins une étape de formation d'une couche de protection contre les aluminosilicates de calcium et de magnésium CMAS directement sur le substrat ou sur une couche de barrière thermique présente sur le substrat, l'étape de formation étant réalisée avec un des procédés suivants :
- projection plasma de suspension à partir d'au moins une suspension contenant une poudre ou un précurseur d'un matériau de protection contre les aluminosilicates de calcium et de magnésium CMAS et une poudre ou un précurseur d'un matériau non mouillant ou de toute combinaison de ces éléments,
- projection par flamme à grande vitesse à partir d'au moins une suspension contenant une poudre ou un précurseur d'un matériau de protection contre les aluminosilicates de calcium et de magnésium CMAS et une poudre ou un précurseur d'un matériau non mouillant ou de toute combinaison de ces éléments,
- projection plasma à pression atmosphérique d'une poudre d'un matériau de protection contre les aluminosilicates de calcium et de magnésium CMAS en combinaison avec projection plasma de suspension ou projection par flamme à grande vitesse à partir d'une solution contenant une poudre ou un précurseur de matériau non mouillant en suspension..

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :
- la figure 1 montre l'infiltration de contaminants liquides dans une pièce de turbomachine munie d'une couche de protection contre les aluminosilicates de calcium et de magnésium CMAS selon l'art antérieur,
- les figures 2 et 3 montrent l'infiltration de contaminants liquides dans une pièce de turbomachine munie d'une couche de protection contre les aluminosilicates de calcium et de magnésium CMAS selon l'invention,
- la figure 4 est un premier exemple de mise en œuvre d'un procédé de réalisation d'une pièce de turbomachine selon l'invention,
- la figure 5 est un deuxième exemple de mise en œuvre d'un procédé de réalisation d'une pièce de turbomachine selon l'invention,
- la figure 6 est un troisième exemple de mise en œuvre d'un procédé de réalisation d'une pièce de turbomachine selon l'invention,
- la figure 7 est un quatrième exemple de mise en œuvre d'un procédé de réalisation d'une pièce de turbomachine selon l'invention.

### Description détaillée de l'invention

L'invention s'applique d'une manière générale à toute pièce de turbomachine revêtue d'une couche de protection comprenant une phase d'un matériau de protection contre les aluminosilicates de calcium et de magnésium CMAS. Par « matériau de protection contre les CMAS », on entend tous les matériaux qui permettent d'empêcher ou de réduire l'infiltration de CMAS fondus dans la couche de protection notamment par la formation d'au moins une couche de barrière étanche. On pourra citer à titre d'exemple parmi les couches barrières étanches les plus fréquemment rencontrées, la formation de phases apatites de formule générique (Ca₄Re₆(SiO₄)₆O) ou Ca₂Re₈(SiO₄)₆O₂ ou bien de phases anortithe de formule générique CaAl₂Si₂O₈.

A titre d'exemples non limitatifs, le matériau de protection contre les aluminosilicates de calcium et de magnésium CMAS susceptible de former par réaction chimique avec les CMAS une couche ou phase continue étanche à toute autre contamination telle qu'une phase de type apatite correspond à un des matériaux suivants ou à un mélange de plusieurs des matériaux suivants : les zirconates de terre rare RE₂Zr₂O₇, où RE = Y (Yttrium), La (Lanthane), Ce (Cérium), Pr (Praséodyme), Nd (Néodyme), Pm (Prométhium), Sm (Samarium), Eu (Europium), Gd (Gadolinium), Tb (Terbium), Dy (Dysprosium), Ho (Holmium), Er (Erbium), Tm (Thulium), Yb (Ytterbium), Lu (Lutécium), les zircones partiellement ou totalement stabilisées, les phases delta A'₄B₃O₁₂, où A' désigne un élément quelconque choisi parmi : Y, La, Ce, Pr, Nd, Pm, Sm, Eu, Gd, Tb, Dy, Ho, Er, Tm, Yb et Lu et B = Zr, Hf, les composites comprenant Y₂O₃ avec ZrO₂, Al₂O₃, ou TiO₂, les hexaaluminates, les spinelles, les mono-silicates et di-silicates de terres rares RE où RE = Y, La, Ce, Pr, Nd, Pm, Sm, Eu, Gd, Tb, Dy, Ho, Er, Tm, Yb, Lu. De préférence, le matériau de protection contre les aluminosilicates de calcium et de magnésium CMAS est choisi parmi : les zirconates de terre rare, les zircones dopées, les silicates de terre rare et leur mélange.

Conformément à l'invention, on ajoute à cette première phase, constitutive de la matrice de la couche de protection contre les CMAS, une deuxième phase sous forme de particules d'au moins un matériau anti-mouillant aux CMAS dispersées dans la couche de protection dont la matrice est formée par la première phase.

En effet, la présence d'une phase non mouillante dans le volume de la couche de protection contre les CMAS permet de limiter l'infiltration capillaire des CMAS fondus dans la couche et ainsi de localiser la réaction de formation de la couche barrière anti-CMAS au plus près de la surface de la couche de protection. Ainsi, les changements de propriétés thermomécaniques ou de volumes, provenant de la formation de nouvelles phases, n'induisent pas de contraintes mécaniques fortes au cœur de la couche de protection. Ceci permet d'augmenter la durée de vie de la protection et, par conséquent, de la pièce de turbomachine revêtue en conditions d'utilisation. La présence d'une phase non mouillante aux CMAS dans le volume de la couche de protection contre les CMAS permet également de conserver tout l'intérêt de la fissuration verticale, initiale ou induite par effet thermomécanique en service, de la couche de protection, en limitant l'infiltration de ces fissures par le contaminant liquide. Encore une fois, on augmente la durée de vie de la protection et, par conséquent, de la pièce de turbomachine en conditions d'utilisation. En outre, la présence de la phase non mouillante dans le volume de la couche de protection contre les CMAS sous forme finement dispersée permet d'augmenter son efficacité anti-mouillage.

Les particules dispersées dans la matrice ou première phase de la couche de protection contre les CMAS sont notamment constituées d'un matériau anti-mouillant aux CMAS correspondant à un matériau ou un mélange de matériaux choisis parmi les matériaux suivants : CaF₂, LnPO₄ où Ln = La (Lanthane), Gd (Gadolinium), Sm (Samarium), Nd (Néodyme)), les phases MAX (Mₙ₊₁AXₙ (n=1,2 ou 3) où M = Sc (Scandium), Y (Yttrium), La (Lanthane), Mn (manganèse), Re (Rhénium), W (Tungstène), Hf (Hafnium), Zr (Zirconium), Ti (Titane), A désigne un élément quelconque des groupes IIIA, IVA, VA ou VIA et X = C,N, AIN, BN, SiC et SiOC. Plus préférentiellement, le matériau anti-mouillant aux CMAS est choisi parmi les matériaux suivants : CaF₂, LnPO₄, BN et leurs mélanges.

La deuxième phase non-mouillante sous forme de particules dispersées dans la couche de protection contre les CMAS peut être obtenue à partir de poudres et de suspensions.

Les particules de matériau anti-mouillant aux CMAS dispersées dans la première phase présentent de préférence une taille moyenne comprise entre 10 nm et 10 µm et préférentiellement comprise entre 10 nm et 1 µm. Dans le présent exposé, les termes « compris entre ... et ... » doivent être entendus comme incluant les bornes.

La couche de protection présente une teneur volumique en particules de matériau anti-mouillant aux CMAS qui peut être comprise entre 1% et 80%, préférentiellement entre 1% et 30%.

La couche de protection peut présenter un gradient de composition suivant lequel le pourcentage volumique de la première phase constituée du matériau contre les CMAS et de la deuxième phase constituée par des particules de matériau anti-mouillant aux CMAS évolue dans le sens de l'épaisseur de la couche de protection. Plus précisément, le pourcentage volumique de particules de matériau anti-mouillant présentes dans la couche de protection contre peut varier dans le sens de l'épaisseur de la couche de protection, le pourcentage volumique de particules de matériau anti-mouillant augmentant progressivement entre une première zone de ladite couche voisine du substrat et une deuxième zone de ladite couche éloignée de la première zone afin de concentrer la teneur de la couche de protection en agent anti-mouillant au voisinage de sa surface.

La couche de protection présente de préférence une structure poreuse, ce qui lui permet d'avoir de bonnes propriétés d'isolation thermique. La couche de protection peut également présenter des fissures verticales, présentes initialement dans la couche ou formées en cours d'utilisation, qui permettent de conférer à la couche une plus grande capacité de déformation et d'atteindre, par conséquent, des durées de vie élevées. La microstructure poreuse et fissurée (initialement ou en cours d'utilisation) de la couche de protection est principalement obtenue en contrôlant le procédé de mise en forme (dépôt) de la couche comme bien connu en soi.

Grâce à la présence d'une deuxième phase anti-mouillante aux CMAS dans la couche de protection permettant de retenir les CMAS liquides au voisinage de la surface de la couche, ces porosités et fissures ne constituent plus des chemins privilégiés pour l'infiltration du CMAS fondu comme dans l'art antérieur. L'efficacité du matériau de protection contre les CMAS constitutif de la première phase est ainsi préservée.

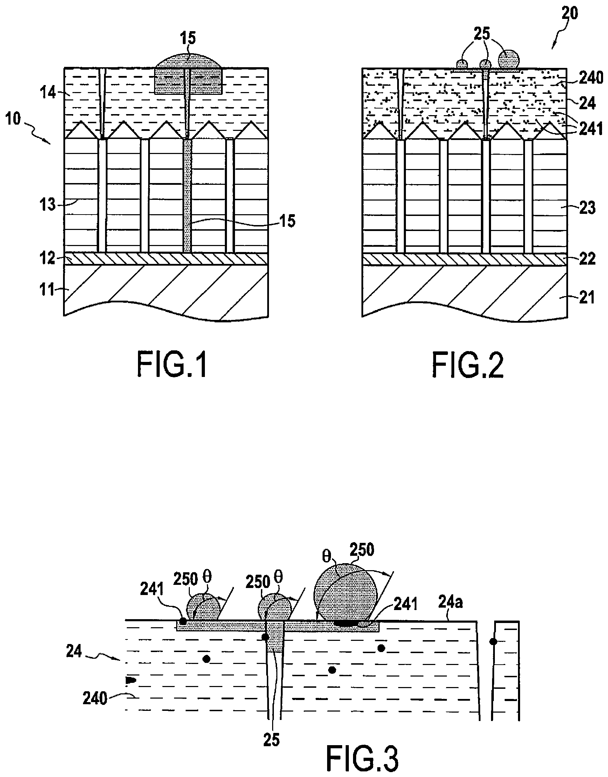

Les figures 1, 2 et 3 illustrent les effets produits par une couche de protection contre les aluminosilicates de calcium et de magnésium CMAS selon l'invention, à savoir une couche de protection composite comprenant les première et deuxième phases décrites ci-avant, et une couche de protection contre les aluminosilicates de calcium et de magnésium CMAS selon l'art antérieur. Plus précisément, la figure 1 montre une pièce 10 constituée d'un substrat 11 en superalliage à base de nickel revêtu dans l'ordre d'une couche de liaison alumino-formeuse 12, d'une couche de barrière thermique 13 en ZrO₂ - Y₂O₃ (8% massique) communément notée YSZ et d'une couche de protection contre les CMAS 14 selon l'art antérieur constituée de Gd₂Zr₂O₇, la pièce étant en présence de CMAS liquides 15 (fondus).

La figure 2 montre une pièce 20 constituée d'un substrat 21 en superalliage à base de nickel revêtu, dans l'ordre, d'une couche de liaison alumino-formeuse 22, d'une couche de barrière thermique 23 en YSZ et d'une couche de protection contre les CMAS 24, la couche 24 comprenant ici une première phase 240 constituée de Gd₂Zr₂O₇ en tant que matériau de protection contre les CMAS et une deuxième phase 241 dispersée dans la couche 24 et constituée de fluorure de calcium CaF₂ en tant que matériau anti-mouillant aux CMAS, la pièce étant en présence de CMAS liquides 25 (fondus).

Dans le cas d'une couche de protection selon l'art antérieur telle que représentée sur la figure 1, les contaminants liquides de type CMAS 15 s'infiltrent profondément dans les fissures de la couche de protection 14 ainsi que dans la couche de barrière thermique 13.

De manière différente, dans le cas d'une couche de protection selon l'invention telle que représentée sur la figure 2, la profondeur d'infiltration des contaminants liquides de type CMAS 25 dans la couche de protection 24 est limitée par la présence de la deuxième phase 241 constituée de particules de matériau anti-mouillant aux CMAS dispersées dans la couche de protection 24. Plus précisément, comme illustrés sur la figure 3, les contaminants liquides de type CMAS 25 sont retenus à la surface de la couche de protection 24 dès leur contact avec la deuxième phase 241, ce qui permet de limiter considérablement la profondeur de pénétration des CMAS liquides 25 dans la porosité et les fissures de la couche de protection 24 et de former par réaction chimique avec la première phase des couches ou phases continues et étanches aux contaminants au plus près de la surface de la couche de protection.

Par « matériau anti-mouillant aux CMAS», on entend ici un matériau qui confère à la couche protection contre les aluminosilicates de calcium et de magnésium CMAS 24 la propriété d'avoir un angle de contact θ entre la surface exposée 24a de la couche de protection 24 et des gouttes 250 de CMAS liquide 24 supérieur ou égale à 45°, de préférence supérieur ou égale à 90°.

L'ajout d'une phase non mouillante aux CMAS au sein de la couche de protection contre les CMAS permet non seulement de limiter le contact entre les CMAS fondus et la couche de protection contre les CMAS à la surface de cette dernière, mais aussi de limiter l'infiltration des contaminants liquides dans les fissures verticales. Ainsi, la réactivité de la couche barrière, permettant de former par réaction chimique avec le CMAS une couche continue étanche à toute autre contamination, est privilégiée par rapport aux mécanismes d'infiltration capillaire.

La couche de protection contre les aluminosilicates de calcium et de magnésium CMAS selon l'invention présente une épaisseur comprise entre 1 µm et 1000 µm et préférentiellement comprise entre 5 µm et 200 µm.

Le substrat de la pièce de turbomachine objet de l'invention, peut être notamment en un superalliage à base de nickel ou cobalt. Dans ce cas, le substrat peut comporter en outre à sa surface une couche de liaison alumino-formeuse. A titre d'exemple, la couche de liaison alumino-formeuse peut inclure des alliages de type MCrAIY (où M = Ni, Co, Ni et Co), des aluminures de nickel type β-NiAl (modifiés ou non par du Pt, Hf, Zr, Y, Si ou des combinaisons de ces éléments), des aluminures d'alliages γ-Ni-γ'-Ni₃Al (modifiée ou non par du Pt, Cr, Hf, Zr, Y, Si ou des combinaisons de ces éléments), les phases MAX (Mₙ₊₁AXₙ (n=1,2,3) où M = Sc, Y, La, Mn, Re, W, Hf, Zr, Ti; A = groupes IIIA, IVA, VA, VIA ; X = C,N), ou toute autre sous couche de liaison adaptée, ainsi que des mélanges de toutes celles-ci. Le substrat peut être également constitué des superalliages AM1, MC-NG, CMSX4 et dérivés, ou René et dérivés.

La couche de liaison protège le substrat de la corrosion et de l'oxydation tout en assurant une bonne accroche mécanique et/ou chimique entre le substrat et la couche sus-jacente correspondant notamment à la couche de protection contre les CMAS de l'invention ou à une couche de barrière thermique.

Les couches de liaisons peuvent être formées et déposées notamment par PVD (dépôt par évaporation physique, en anglais « *Physical Vapor Deposition* »), APS, HVOF, LPPS (projection plasma à basse pression, en anglais « *Low Pressure Plasma Spraying* ») ou dérivés, IPS (projection plasma sous atmosphère inerte, en anglais « *Inert Plasma Spraying* »), CVD (dépôt par évaporation chimique, en anglais « *Chemical Vapor Deposition* »), APVS (Aluminisation Phase Vapeur Snecma), frittage flash (en anglais « *Spark Plasma Sintering* »), dépôt électrolytique, ainsi que tout autre procédé de dépôt et mise en forme adapté.

Le substrat utilisé dans l'invention présente une forme correspondant à celle de la pièce de turbomachine à réaliser. Les pièces de turbomachine comprenant la couche de protection selon l'invention peuvent être, mais pas exclusivement, des aubes mobiles, des distributeurs, des anneaux de turbine haute pression et des parois de chambre de combustion.

La couche de protection contre les aluminosilicates de calcium et de magnésium composite, c'est-à-dire comprenant les première et deuxième phases telles que définies ci-avant, peut être directement déposée sur le substrat de la pièce de turbomachine. La couche de protection de l'invention constitue dans ce cas une barrière thermique pour le substrat.

Selon une variante de réalisation, une couche de barrière thermique peut être interposée entre le substrat et la couche de protection composite de l'invention, ou entre une couche de liaison alumino-formeuse et la couche de protection composite de l'invention, cette dernière étant utilisée dans ce cas en tant que couche de fonctionnalisation à la surface de la couche de barrière thermique qui présente ou non une protection contre les contaminants liquides à haute température de type aluminosilicates de calcium et de magnésium CMAS. A titre d'exemple non limitatif, la couche de barrière thermique peut être constituée de zircone yttriée avec une teneur massique de Y₂O₃ comprise entre 7% et 8%. La couche de barrière thermique, sur laquelle est réalisée la couche de protection composite de l'invention, peut présenter une microstructure, homogène, homogène et poreuse, micro-fissurée verticalement, micro-fissurée verticalement et poreuse, colonnaire, colonnaire et poreuse, ainsi que des architectures incluant ces différentes microstructures.

La couche de barrière thermique peut être formée et déposée notamment par EB-PVD (dépôt en phase vapeur assisté par un faisceau d'électrons, en anglais « *Electron Beam Physical Vapor Déposition* »), APS, HVOF, voie sol-gel, SPS, SPPS (projection plasma de solution de précurseur, en anglais « Solution Precursor Plasma Spraying »), HVSFS ou tout autre procédé adapté.

La couche de protection composite de l'invention peut être mise en œuvre en tant que couche de fonctionnalisation à la surface d'un empilement complexe décrivant un système barrière environnementale (EBC), ou sur un système barrière thermique environnementale (TEBC), protégeant des pièces en composites à matrice céramique (CMC). Le système barrière thermique environnementale, permettant de protéger notamment les matériaux CMC, peut inclure, mais pas exclusivement, les matériaux : MoSi₂, BSAS (BaO₁₋ₓ-SrOₓ-Al₂O₃-2SiO₂), la Mullite (3 Al₂O₃-2 SiO₂), les mono- silicates et di-silicates de terres rares RE où RE = Y, La, Ce, Pr, Nd, Pm, Sm, Eu, Gd, Tb, Dy, Ho, Er, Tm, Yb, Lu), les zircones totalement ou partiellement stabilisées voire dopées, et toute autre composition adaptée ainsi que des mélanges de toutes celles-ci.

La couche de protection composite de l'invention peut être formée et déposée par un des procédés suivants :
- APS (projection plasma à pression atmosphérique - en anglais *« Atmospheric Plasma Spraying »),*
- HVOF (projection par flamme à grande vitesse - en anglais « *High Velocity Oxygen Fuel »),*
- SPS (projection plasma de suspensions - en anglais « *Suspension Plasma Spraying »),*
- SPPS (projection plasma de solutions de précurseurs - en anglais *« Solution Precursor Plasma Spraying »),*
- HVSFS (Projection d'une suspension dans une flamme à grande vitesse - en anglais « *High Velocity Suspension Flame Spray* »), également connu sous le terme S-HVOF (Suspension-HVOF).

### Exemple 1

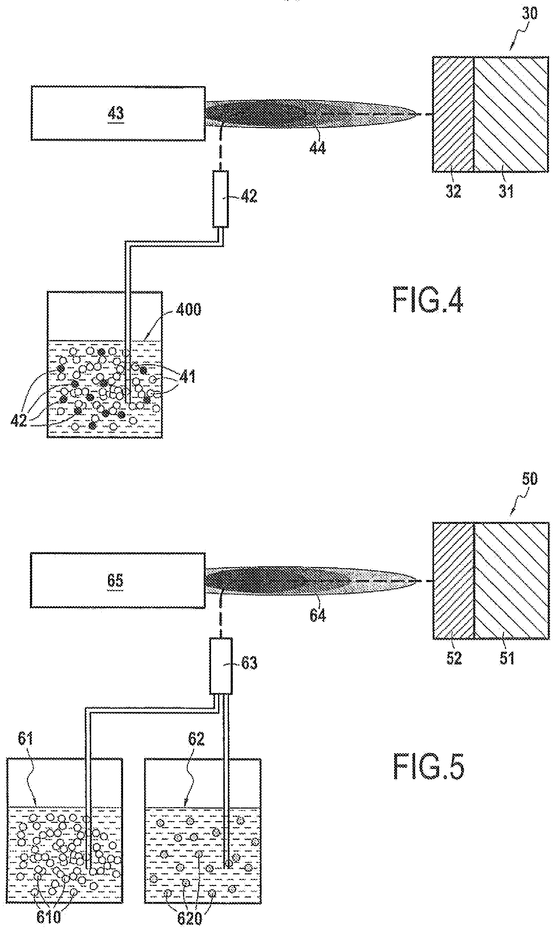

Comme illustré sur la figure 4, un procédé de fabrication d'une pièce de turbomachine 30 conforme à l'invention a été mis en œuvre sur un substrat 31 en superalliage base nickel de type AM1 sur lequel a été déposée une couche de protection composite contre les aluminosilicates de calcium et de magnésium CMAS 32 par projection SPS, la couche de protection 32 comprenant, conformément à l'invention, une première phase de Gd₂Zr₂O₇ en tant que matériau de protection contre les aluminosilicates de calcium et de magnésium CMAS et une deuxième phase de CaF₂ sous forme de particules dispersées dans la couche de protection 32 en tant que matériau anti-mouillant aux CMAS.

Dans cet exemple, une solution 40 contenant une poudre du matériau anti-CMAS en suspension 41, ici Gd₂Zr₂O₇, et une poudre du matériau anti-mouillant aux CMAS 42, ici CaF₂, dans des proportions volumiques adaptées pour la réalisation de la couche de protection 32 est utilisée. La solution 40 est injectée au travers d'un même injecteur 42 de suspension au cœur d'un jet plasma 44 généré par une torche à plasma 43, permettant le traitement thermocinétique de la solution 40, à savoir la fusion et l'accélération des poudres.

L'exemple n'exclut pas la possibilité d'utiliser d'autres matériaux anti-CMAS ni d'autres matériaux non mouillant aux CMAS. De plus, il est également possible que la phase liquide de la solution contienne non plus des poudres mais des précurseurs de l'une des deux ou des deux phases que l'on souhaite former au sein de la couche de protection composite. Dans ce cas particulier, le traitement thermocinétique permettra de former la phase *in-situ* en vol, de la fondre et de l'accélérer afin de générer le revêtement. Il est également possible de réaliser le revêtement composite en employant non plus un plasma mais une flamme à grande vitesse résultant de ce cas à un mode de réalisation HVSFS.

### Exemple 2

Comme illustré sur la figure 5, un procédé de fabrication d'une pièce de turbomachine 50 conforme à l'invention a été mis en œuvre sur un substrat 51 en superalliage base nickel de type AM1 sur lequel a été déposée une couche de protection composite contre les aluminosilicates de calcium et de magnésium CMAS 52 par projection SPS, la couche de protection 52 comprenant, conformément à l'invention, une première phase de Gd₂Zr₂O₇ en tant que matériau de protection contre les aluminosilicates de calcium et de magnésium CMAS et une deuxième phase de CaF₂ sous forme de particules dispersées dans la couche de protection 52 en tant que matériau anti-mouillant aux CMAS.

Dans cet exemple, une première solution 61 contenant une poudre du matériau anti-CMAS en suspension 610, ici Gd₂Zr₂O₇, et une deuxième solution 62 contenant une poudre d'un matériau anti-mouillant aux CMAS en suspension 620, ici CaF₂, dans des proportions volumiques adaptées pour la réalisation de la couche de protection 62 sont utilisées. Les deux solutions 61 et 62 sont injectées au travers d'un même injecteur 63 de suspension au cœur d'un jet plasma 64 généré par une torche à plasma 65, permettant le traitement thermocinétique des solutions 61 et 62, à savoir la fusion et l'accélération des poudres.

L'exemple n'exclut pas la possibilité d'utiliser d'autres matériaux anti-CMAS ni d'autres matériaux non mouillant aux CMAS. De plus, il est également possible que la phase liquide de la solution contienne non plus des poudres mais des précurseurs de l'une des deux ou des deux phases que l'on souhaite former au sein de la couche de protection composite. Dans ce cas particulier, le traitement thermocinétique permettra de former la phase *in-situ* en vol, de la fondre et de l'accélérer afin de générer le revêtement. Il est également possible de réaliser le revêtement composite en employant non plus un plasma mais une flamme à grande vitesse résultant de ce cas à un mode de réalisation HVSFS.

### Exemple 3

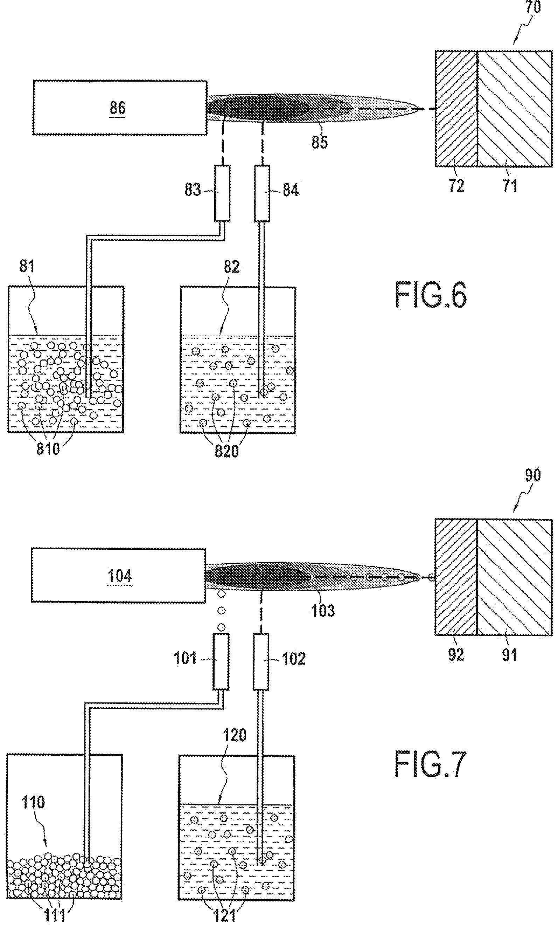

Comme illustré sur la figure 6, un procédé de fabrication d'une pièce de turbomachine 70 conforme à l'invention a été mis en œuvre sur un substrat 71 en superalliage base nickel de type AM1 sur lequel a été déposée une couche de protection composite contre les aluminosilicates de calcium et de magnésium CMAS 72 par projection SPS, la couche de protection 72 comprenant, conformément à l'invention, une première phase de Gd₂Zr₂O₇ en tant que matériau de protection contre les aluminosilicates de calcium et de magnésium CMAS et une deuxième phase de CaF₂ sous forme de particules dispersées dans la couche de protection 72 en tant que matériau anti-mouillant aux CMAS.

Dans cet exemple, une première solution 81 contenant une poudre du matériau anti-CMAS en suspension 810, ici Gd₂Zr₂O₇, et une deuxième solution 82 contenant une poudre d'un matériau anti-mouillant aux CMAS en suspension 820, ici CaF₂, dans des proportions volumiques adaptées pour la réalisation de la couche de protection 72 sont utilisées. Les solutions 81 et 82 sont injectées respectivement au travers d'un premier et un deuxième injecteurs de suspension spécifiques 83 et 84 au cœur d'un jet plasma 85 généré par une torche à plasma 86, permettant le traitement thermocinétique des solutions 81 et 82 à savoir la fusion et l'accélération des poudres.

L'exemple n'exclut pas la possibilité d'utiliser d'autres matériaux anti-CMAS ni d'autres matériaux non mouillant aux CMAS. De plus, il est également possible que la phase liquide de la solution contienne non plus des poudres mais des précurseurs de l'une des deux ou des deux phases que l'on souhaite former au sein de la couche de protection composite. Dans ce cas particulier, le traitement thermocinétique permettra de former la phase *in-situ* en vol, de la fondre et de l'accélérer afin de générer le revêtement. Il est également possible de réaliser le revêtement composite en employant non plus un plasma mais une flamme à grande vitesse résultant de ce cas à un mode de réalisation HVSFS.

### Exemple 4

Comme illustré sur la figure 7, un procédé de fabrication d'une pièce de turbomachine 90 conforme à l'invention a été mis en œuvre sur un substrat 91 en superalliage base nickel de type AM1 sur lequel a été déposée une couche de protection composite contre les aluminosilicates de calcium et de magnésium CMAS 92 par projection hybride SPS et APS, la couche de protection 92 comprenant, conformément à l'invention, une première phase de Gd₂Zr₂O₇ en tant que matériau de protection contre les aluminosilicates de calcium et de magnésium CMAS et une deuxième phase de CaF₂ sous forme de particules dispersées dans la couche de protection 92 en tant que matériau anti-mouillant aux CMAS.

Dans cet exemple, une poudre 110 composée de particules 111 du matériau anti-CMAS, ici Gd₂Zr₂O₇, et une solution 120 contenant une poudre d'un matériau anti-mouillant aux CMAS en suspension 121, ici CaF₂, dans des proportions volumiques adaptées pour la réalisation de la couche de protection 92 sont utilisées. Pour la poudre 110, on utilise le procédé APS suivant lequel la poudre 110 est injectée au travers d'un premier injecteur spécifique 101 au cœur d'un jet plasma 103 généré par une torche à plasma 104, permettant le traitement thermocinétique de la poudre 110. Pour la solution 120, on utilise le procédé SPS suivant lequel la solution 120 est injectée au travers d'un deuxième injecteur de suspension spécifique 102 au cœur du jet plasma 103 généré par une torche à plasma 104, permettant le traitement thermocinétique de la poudre 120.

L'exemple n'exclus pas la possibilité d'utiliser d'autres matériaux anti-CMAS ni d'autres matériaux non mouillant. De plus, il est également possible que la phase liquide contienne non plus des poudres mais des précurseurs de l'une des deux ou des deux phases que l'on souhaite former au sein de la couche composite. Dans ce cas particulier, le traitement thermocinétique permettra de former la phase *in-situ* en vol, de la fondre et de l'accélérer afin de générer le revêtement. Il est également possible de réaliser le revêtement composite en employant non plus un mélange plasma mais une flamme à grande vitesse résultant de ce cas à un mode de réalisation hybride HVOF et HVSFS.

## Revendications

1. Pièce de turbomachine revêtue comprenant un substrat (21) et au moins une couche de protection contre les aluminosilicates de calcium et de magnésium (CMAS) (24) présente sur ledit substrat, la couche (24) comprenant une première phase (240) d'un matériau de protection contre les aluminosilicates de calcium et de magnésium (CMAS) et une deuxième phase (241) comprenant des particules d'un matériau anti-mouillant dispersées dans la première phase,
le matériau anti-mouillant correspondant à un matériau ou un mélange de matériaux choisis parmi les matériaux suivants :
- CaF₂,
- LnPO₄ où Ln = La (Lanthane), Gd (Gadolinium), Sm (Samarium), Nd (Néodyme),
- les phases MAX Mₙ₊₁AXₙ avec n=1,2,3 où M = Sc (Scandium), Y (Yttrium), La (Lanthane), Mn (manganèse), Re (Rhénium), W (Tungstène), Hf (Hafnium), Zr (Zirconium), Ti (Titane), où A = groupes IIIA, IVA, VA, VIA et où X = C,N,
- AlN, et
- BN.

2. Pièce selon la revendication 1, dans laquelle les particules du matériau anti-mouillant dispersées dans la première phase (240) présentent une taille moyenne comprise entre 10 nm et 10 µm.

3. Pièce selon la revendication 1 ou 2, dans laquelle le pourcentage volumique de particules du matériau anti-mouillant dispersées dans la première phase (240) est compris entre 1% et 80%.

4. Pièce selon la revendication 3, dans laquelle le pourcentage volumique de particules du matériau anti-mouillant dispersées au sein du matériau de la première phase (240) varie dans le sens de l'épaisseur de la couche de protection (24), le pourcentage volumique desdites particules augmentant progressivement entre une première zone de ladite couche voisine du substrat (21) et une deuxième zone de ladite couche éloignée de la première zone.

5. Pièce selon l'une quelconque des revendications 1 à 4, dans laquelle la couche de protection contre les aluminosilicates de calcium et de magnésium (CMAS) (24) présente une épaisseur comprise entre 1 µm et 1000 µm.

6. Pièce selon l'une quelconque des revendications 1 à 5, dans laquelle le matériau de protection contre les aluminosilicates de calcium et de magnésium (CMAS) de la première phase (240) est susceptible de former des phases de type apatite et correspond à un des matériaux suivants ou à un mélange des matériaux suivants :
- les zirconates de terre rare RE₂Zr₂O₇, où RE = Y (Yttrium), La (Lanthane), Ce (Cérium), Pr (Praséodyme), Nd (Néodyme), Pm (Prométhium), Sm (Samarium), Eu (Europium), Gd (Gadolinium), Tb (Terbium), Dy (Dysprosium), Ho (Holmium), Er (Erbium), Tm (Thulium), Yb (Ytterbium), Lu (Lutécium),
- les zircones partiellement ou totalement stabilisées,
- les phases delta A'₄B₃O₁₂, où A'= Y → Lu et B = Zr, Hf,
- les composites comprenant Y₂O₃ avec ZrO₂, Al₂O₃, ou TiO₂,
- les hexaaluminates,
- les spinelles,
- les mono-silicates et di-silicates de terres rares RE où RE = Y, La, Ce, Pr, Nd, Pm, Sm, Eu, Gd, Tb, Dy, Ho, Er, Tm, Yb, Lu.

7. Pièce selon l'une quelconque des revendications 1 à 6, comprenant en outre un revêtement de barrière thermique (23) interposé entre le substrat (21) et la couche de protection contre les aluminosilicates de calcium et de magnésium (CMAS) (24).

8. Pièce selon l'une quelconque des revendications 1 à 7, dans laquelle le substrat (21) est un superalliage à base de nickel ou cobalt et comporte à sa surface une couche de liaison alumino-formeuse (22) ou une couche en matériau composite à matrice céramique (CMC), ou une couche en matériau composite à matrice céramique (CMC) revêtue d'une couche de liaison alumino-formeuse.

9. Procédé de fabrication d'une pièce selon l'une quelconque des revendications 1 à 8, comprenant au moins une étape de formation de la couche de protection contre les aluminosilicates de calcium et de magnésium (CMAS) (24) directement sur le substrat (21) ou sur une couche de barrière thermique (23) présente sur le substrat, l'étape de formation étant réalisée avec un des procédés suivants :
- projection plasma de suspension à partir d'au moins une suspension contenant une poudre ou un précurseur d'un matériau de protection contre les aluminosilicates de calcium et de magnésium (CMAS) et une poudre ou un précurseur d'un matériau anti-mouillant,
- projection de suspension par flamme à grande vitesse à partir d'au moins une suspension contenant une poudre ou un précurseur d'un matériau de protection contre les aluminosilicates de calcium et de magnésium (CMAS) et une poudre ou un précurseur d'un matériau anti-mouillant,
- projection plasma à pression atmosphérique d'une poudre d'un matériau de protection contre les aluminosilicates de calcium et de magnésium (CMAS) en combinaison avec projection plasma de suspension ou projection par flamme à grande vitesse à partir d'une solution contenant un précurseur d'un matériau céramique anti-mouillant ou d'une poudre du matériau céramique anti-mouillant en suspension.

## Patentansprüche

1. Beschichtetes Turbomaschinenbauteil, umfassend ein Substrat (21) und mindestens eine auf dem Substrat vorhandene Schutzschicht gegen die Calcium- und Magnesiumaluminosilikate (CMAS) (24), wobei die Schicht (24) eine erste Phase (240) eines Schutzmaterials gegen die Calcium- und Magnesiumaluminosilikate (CMAS) und eine zweite Phase (241) umfasst, umfassend Partikel eines Antibenetzungsmaterial, die in der ersten Phase verteilt sind,
wobei das Antibenetzungsmaterial einem Material oder einem Materialgemisch entspricht, das aus den folgenden Materialien ausgewählt ist:
- CaF₂,
- LnPO₄, wobei Ln = La (Lanthan), Gd (Gadolinium), Sm (Samarium), Nd (Neodym),
- den Phasen MAX Mₙ₊₁AXₙ mit n=1,2,3, wobei M = Sc (Scandium), Y (Yttrium), La (Lanthan), Mn (Mangan), Re (Rhenium), W (Wolfram), Hf (Hafnium), Zr (Zirconium), Ti (Titan), wobei A = Gruppen IIIA, IVA, VA, VIA und wobei X = C,N,
- AIN und
- BN.

2. Bauteil nach Anspruch 1, wobei die Partikel des in der ersten Phase (240) verteilten Antibenetzungsmaterials eine mittlere Größe aufweisen, die zwischen 10 nm und 10 µm liegt.

3. Bauteil nach Anspruch 1 oder 2, wobei der Volumenprozentsatz von in der ersten Phase (240) verteilten Partikeln des Antibenetzungsmaterials zwischen 1 % und 80 % liegt.

4. Bauteil nach Anspruch 3, wobei der Volumenprozentsatz von im Material der ersten Phase (240) verteilten Partikeln des Antibenetzungsmaterials in Richtung der Dicke der Schutzschicht (24) schwankt, wobei der Volumenprozentsatz der Partikel schrittweise zwischen einer ersten Zone der Schicht, die zum Substrat (21) benachbart ist, und einer zweiten Zone der Schicht, die von der ersten Zone entfernt ist, zunimmt.

5. Bauteil nach einem der Ansprüche 1 bis 4, wobei die Schutzschicht gegen die Calcium- und Magnesiumaluminosilikate (CMAS) (24) eine Dicke aufweist, die zwischen 1 µm und 1000 µm liegt.

6. Bauteil nach einem der Ansprüche 1 bis 5, wobei das Schutzmaterial gegen die Calcium- und Magnesiumaluminosilikate (CMAS) der ersten Phase (240) imstande ist, Phasen vom Typ Apatit zu bilden und einem der folgenden Materialien entspricht oder einem der folgenden Materialgemische entspricht:
- den Seltene-Erden-Zirconaten RE₂Zr₂O₇, wobei RE = Y (Yttrium), La (Lanthan), Ce (Cerium), Pr (Praséodym), Nd (Neodym), Pm (Promethium), Sm (Samarium), Eu (Europium), Gd (Gadolinium), Tb (Terbium), Dy (Dysprosium), Ho (Holmium), Er (Erbium), Tm (Thulium), Yb (Ytterbium), Lu (Lutecium),
- den teilweise oder vollständig stabilisierten Zirconen,
- den Phasen Delta A'₄B₃O₁₂, wobei A' = Y → Lu und B = Zr, Hf,
- den Kompositen, umfassend Y₂O₃ mit ZrO₂, Al₂O₃, oder TiO₂,
- den Hexaaluminaten,
- den Spinellen,
- den Seltene-Erden-Monosilicaten und -Disilicaten RE, wobei RE = Y, La, Ce, Pr, Nd, Pm, Sm, Eu, Gd, Tb, Dy, Ho, Er, Tm, Yb, Lu.

7. Bauteil nach einem der Ansprüche 1 bis 6, umfassend ferner eine Thermobarrierebeschichtung (23) zwischen dem Substrat (21) und der Schutzschicht gegen die Calcium- und Magnesiumaluminosilikate (CMAS) (24).

8. Bauteil nach einem der Ansprüche 1 bis 7, wobei das Substrat (21) eine Superlegierung auf der Basis von Nickel oder Cobalt ist und auf seiner Oberfläche eine aluminoformende Verbindungsschicht (22) oder eine Schicht aus Kompositmaterial mit Keramikmatrix (CMC) oder eine Schicht aus Kompositmaterial mit Keramikmatrix (CMC), beschichtet mit einer aluminoformenden Verbindungsschicht, aufweist.

9. Verfahren zur Herstellung eines Bauteils nach einem der Ansprüche 1 bis 8, umfassend mindestens einen Schritt des Bildens der Schutzschicht gegen die Calcium- und Magnesiumaluminosilikate (CMAS) (24) direkt auf dem Substrat (21) oder auf einer auf dem Substrat vorhandenen thermischen Barriereschicht (23), wobei der Bildungsschritt mit einem der folgenden Verfahren durchgeführt wird:
- Suspensionsplasmaprojektion auf der Basis von mindestens einer Suspension, die ein Pulver oder einen Vorläufer eines Schutzmaterials gegen die Calcium- und Magnesiumaluminosilikate (CMAS) und ein Pulver oder einen Vorläufer eines Antibenetzungsmaterials enthält,
- Suspensionsprojektion durch Flamme mit hoher Geschwindigkeit auf der Basis von mindestens einer Suspension, die ein Pulver oder einen Vorläufer eines Schutzmaterials gegen die Calcium- und Magnesiumaluminosilikate (CMAS) und ein Pulver oder einen Vorläufer eines Antibenetzungsmaterials enthält,
- Plasmaprojektion unter atmosphärischem Druck eines Pulvers eines Schutzmaterials gegen die Calcium- und Magnesiumaluminosilikate (CMAS) in Kombination mit Suspensionsplasmaprojektion oder Suspensionsprojektion durch Flamme mit hoher Geschwindigkeit auf der Basis einer Lösung, die einen Vorläufer eines Antibenetzungs-Keramikmaterials oder eines Pulvers eines Antibenetzungs-Keramikmaterials enthält.

## Claims

1. Coated gas turbine engine part comprising a substrate (21) and at least one calcium-magnesium-alumino-silicate (CMAS) protection layer (24) present on said substrate, the layer (24) comprising a first phase (240) of a calcium-magnesium-alumino-silicate (CMAS) protection material and a second phase (241) comprising particles of an anti-wetting material dispersed in the first phase,
the anti-wetting material corresponding to a material or mixture of materials selected from the following materials:
- CaF₂,
- LnPO₄ where Ln = La (lanthanum), Gd (gadolinium), Sm (samarium), Nd (neodymium),
- MAX phases Mₙ₊₁AXₙ with n=1,2,3 where M = Sc (scandium), Y (yttrium), La (lanthanum), Mn (manganese), Re (rhenium), W (tungsten), Hf (hafnium), Zr (zirconium), Ti (titanium), where A = groups IIIA, IVA, VA, VIA and where X = C,N,
- AIN, and
- BN.

2. Part according to claim 1, wherein the particles of the anti-wetting material dispersed in the first phase (240) have an average size between 10 nm and 10 µm.

3. Part according to claim 1 or 2, wherein the volume percentage of particles of the anti-wetting material dispersed in the first phase (240) is between 1% and 80%.

4. Part according to claim 3, wherein the volume percentage of particles of the anti-wetting material dispersed within the first phase material (240) varies in the direction of the thickness of the protective layer (24), the volume percentage of said particles gradually increasing between a first zone of said layer adjacent to the substrate (21) and a second zone of said layer remote from the first zone.

5. Part according to any one of claims 1 to 4, wherein the calcium-magnesium-alumino-silicate (CMAS) protection layer (24) has a thickness between 1 µm and 1000 µm.

6. Part according to any one of claims 1 to 5, wherein the calcium-magnesium-alumino-silicate (CMAS) protection material of the first phase (240) is capable of forming apatite type phases and corresponds to one of the following materials or to a mixture of the following materials:
- rare-earth zirconates RE₂Zr₂O₇, where RE = Y (yttrium), La (lanthanum), Ce (cerium), Pr (praseodymium), Nd (neodymium), Pm (promethium), Sm (samarium), Eu (europium), Gd (gadolinium), Tb (terbium), Dy (dysprosium), Ho (holmium), Er (erbium), Tm (thulium), Yb (ytterbium), Lu (lutecium),
- partially or totally stabilized zirconia,
- delta phases A'₄B₃O₁₂, where A'= Y → Lu and B = Zr, Hf,
- composites comprising Y₂O₃ with ZrO₂, Al₂O₃, or TiO₂,
- hexaaluminates,
- spinels,
- rare-earth RE monosilicates and disilicates where RE = Y, La, Ce, Pr, Nd, Pm, Sm, Eu, Gd, Tb, Dy, Ho, Er, Tm, Yb, Lu.

7. Part according to any one of claims 1 to 6, further comprising a thermal barrier coating (23) interposed between the substrate (21) and the calcium-magnesium-alumino-silicate (CMAS) protection layer (24).

8. Part according to any one of claims 1 to 7, wherein the substrate (21) is a nickel or cobalt-based superalloy and has on its surface an alumino-forming bond coat (22) or a ceramic matrix composite (CMC) layer, or a ceramic matrix composite (CMC) layer coated with an alumino-forming bond coat.

9. Process for manufacturing a part according to any one of claims 1 to 8, comprising at least one step of forming the calcium-magnesium-alumino-silicate (CMAS) protection layer (24) directly on the substrate (21) or on a thermal barrier layer (23) present on the substrate, the forming step being performed with one of the following methods:
- suspension plasma spraying from at least one suspension containing a powder or precursor of a calcium-magnesium-alumino-silicate (CMAS) protection material and a powder or precursor of an anti-wetting material,
- high-velocity flame spray suspension from at least one suspension containing a powder or precursor of a calcium-magnesium-alumino-silicate (CMAS) protection material and a powder or precursor of an anti-wetting material,
- atmospheric-pressure plasma spraying of a powder of a calcium-magnesium-alumino-silicate (CMAS) protection material in combination with suspension plasma spraying or high-velocity flame spraying from a solution containing a precursor of an anti-wetting ceramic material or a powder of the suspended anti-wetting ceramic material.
